# EUROPEAN PATENT SPECIFICATION

(11) **EP 1 042 376 B1**
(45) Date of publication and mention of the grant of the patent: **21.05.2003**
(21) Application number: 98964875.3
(22) Date of filing: 23.12.1998
(51) Int. Cl.: C08F 10/02, C08F 2/06, C08F 2/14, C08F 4/642

(54) **ETHYLENE POLYMERIZATION PROCESS IN A LIQUID REACTION MEDIUM**
VERFAHREN ZUR ETHYLENPOLYMERISATION IN EINEM FLÜSSIGEN REAKTIONSMEDIUM
PROCEDE DE POLYMERISATION D'ETHYLENE DANS UN MILIEU REACTIONNEL LIQUIDE

(30) Priority: 23.12.1997 US 68640 P
(43) Date of publication of application: 11.10.2000
(73) Proprietor: ExxonMobil Chemical Patents Inc., Baytown, TX 77520-5200 (US)
(72) Inventor: SHIFFINO, Rinaldo, S., Wilmington, DE 19807 (US); CROWTHER, Donna, J., Seabrook, TX 77586-2835 (US)
(74) Representative: UEXKÜLL & STOLBERG
(86) International application number: US9827360
(87) International publication number: WO99032530

(56) References cited:
- EP-A- 0 582 194
- EP-A- 0 659 757
- EP-A- 0 786 466
- WO-A-94/21691

## Description

### FIELD OF THE INVENTION

This invention relates to a polymerization process for ethylene polymers utilizing specific biscyclopentadienyl metallocenes.

### BACKGROUND OF THE INVENTION

Metallocene-catalyzed polymerization processes are well known in the art. Such processes employ catalyst systems which utilize metallocene compounds for the polymerization of olefinically unsaturated monomers. Metallocene compounds are defined as organometallic coordination compounds obtained as cyclopentadienyl derivatives of a transition metal. Processes which employ multiple metallocenes in a single polymerization reactor are also known. Bridged and unbridged biscyclopentadienyl zirconium or hafnium metal compounds are particularly representative; many are said to be useful for ethylene polymerization. Metallocenes are used as ethylene polymerization catalysts in either supported or unsupported form.

When metallocenes are used for polymerization in unsupported form, such use is often referred to as "homogeneous" polymerization, although depending on the polymerization temperature and other conditions, the polymer product may actually precipitate from the reaction medium giving rise to multiple phases. Unsupported metallocenes are generally employed in ethylene polymerization processes that utilize a reaction medium which is liquid under the polymerization conditions. A hydrocarbon solvent such as toluene is often used. In such polymerizations the liquid reaction medium usually also contains dissolved ethylene monomer and catalyst activator. For example, Mar'in, et al. describe certain ethylene polymerizations using unsubstituted and alkyl-substituted biscyclopentadienyl zirconium dichlorides in toluene at 70°C and 7.5 atm ethylene. Among others, bis(*i*-propylcyclopentadienyl) zirconium dichloride and bis(di-*i*-propylcyclopentadienyl) zirconium dichloride were examined. Bis(*i*-propylcyclopentadienyl) zirconium dichloride was said to exhibit the highest activity. (See "Alkyl-Substituted Zirconocenes As Components Of A Catalytic System Of Ethylene Polymerization", Metalloorganicheskaya Khimiya (Organometallic Chemistry), Vol. 3, No. 2, Mar'in, et al., p. 473-474 (1990)).

Nekhaeva, et al. also report on ethylene polymerizations using unsubstituted and alkyl-substituted biscyclopentadienyl zirconium dichlorides. Among the metallocenes used were bis(*i*-propylcyclopentadienyl) zirconium dichloride, bis(n-propylcyclopentadienyl) zirconium dichloride, bis(di-*i*-propylcyclopentadienyl) zirconium dichloride, bis(cyclohexylcyclopentadienyl) zirconium dichloride, bis(trimethylsilylcyclopentadienyl) zirconium dichloride, and bis(t-butylcyclopentadienyl) zirconium dichloride. The trimethylsilyl-susbtituted metallocene and bis(i-propylcyclopentadienyl) zirconium dichloride were said to have the highest activities. Activities of 55,780 kg/mol-catalyst-hr and 17,900 kg/mol-catalyst-hr were reported in Table 1 for bis(i-propylcyclopentadienyl) zirconium dichloride and bis(n-propylcyclopentadienyl) zirconium dichloride, respectively. (See "Synthesis and Structure of Homo- And Copolymers of Ethylene With Other α-Olefins Obtained By Using Zirconocene Dichloride Derivatives and Methyl Alumoxane", Vysokomolekulyarnye Soedineniya, Vol. (A) 34, No. 1, Nekhaeva, et al, p. 84-91 (1992).)

Tait, et al. describe ethylene polymerizations conducted in toluene at 60°C with biscyclopentadienyl metallocenes of the formula (n⁵-RC₅H₄)₂ZrCl₂, where R is hydrogen, methyl, n-propyl, i-propyl, and t-butyl. In Table 1, the i-propyl and n-propyl metallocenes are reported to have activities of 9.6 and 9.7 kg PE/mmol Zr-hr, respectively.

When metallocenes are used in supported form, they are often used in gas phase polymerization processes. For example, PCT International Publication Number WO 93/09148 shows in Table 1 the gas phase polymerization results for supported metallocene catalysts based on, inter alia, bis(i-propylcyclopentadienyl) zirconium dichloride, bis(i-butylcyclopentadienyl) zirconium dichloride, bis(n-propylcyclopentadienyl) zirconium dichloride, and bis(t-butylcyclopentadienyl) zirconium dichloride.

In U.S. 5,536,796 (Jejelowo, et al.), gas phase polymerizations using supported isomeric mixtures of 1,2- and 1,3-(dialkylcyclopentadienyl) zirconium dichlorides are reported. Example 9 utilizes an isobutyl-substituted metallocene.

U.S. 5,608,019 (Cheruvu, et al.) describes gas phase polymerizations utilizing certain silica supported butyl-substituted metallocenes. The use of bis(i-butylcyclopentadienyl) zirconium dichloride is recited in claims 4 and 19.

Regardless of whether supported or unsupported metallocenes are used, improvements in metallocene polymerization processes are still desired. Metallocenes, compared to transition metal halide polymerization catalysts, are expensive materials. If the metallocene catalyst productivity is too low, the process will not be economical owing to the high catalyst cost. Even if an inexpensive metallocene is used, low productivity will result in high levels of catalyst residue which may require more extensive deashing, contributing to increased costs. These problems are aggravated when metallocene-catalyzed processes are used to make higher density ethylene polymers, such as medium density ethylene/α-olefin copolymers, high density ethylene/α-olefin copolymers, and ethylene homopolymers. This is true because metallocene catalysts, like other catalysts, generally exhibit lower catalyst productivity under the polymerization conditions required to make these kinds of products. Productivity is particularly an issue in the manufacture of ethylene homopolymers.

Thus, there is still a need for supported or unsupported metallocene-catalyzed ethylene homopolymerization, and medium density copolymerization, and high density copolymerization processes that operate with higher catalyst productivity. This is especially true for ethylene homopolymerization.

### SUMMARY OF THE INVENTION

The invention is a process for producing ethylene polymers. The inventive process exhibits very high productivity and is especially useful for the production of ethylene homopolymers or for high density polyethylene (HDPE). In one embodiment, the invention is a process for producing ethylene polymers comprising:
a) introducing ethylene and optional comonomers into a liquid reaction medium, or alternatively, introducing ethylene alone into said liquid reaction medium;
b) maintaining said liquid reaction medium at a temperature between 25 °C and 250 °C;
c) introducing a catalyst activator into said reaction medium; and
d) feeding continuously or semi-continuously into said reaction medium a catalyst solution comprising an unsupported zirconium or hafnium biscyclopentadienyl metallocene having one or more isobutyl groups on each cyclopentadienyl ring thereof.
In other embodiments of the forgoing process the zirconium or hafnium biscyclopentadienyl metallocene is bis(isobutylcyclopentadienyl) zirconium dichloride or bis(methyl isobutylcyclopentadienyl) zirconium dichloride. In a preferred embodiment, ethylene alone is introduced (i.e. without any comonomers) and the zirconium or hafnium biscyclopentadienyl metallocene is bis(isobutylcyclopentadienyl) zirconium dichloride.

### DETAILED DESCRIPTION OF THE INVENTION

In this patent specification, references to the elemental groups will be made in accordance with the new IUPAC nomenclature for the Periodic Table of Elements, as described in Chemical and Engineering News, 63(5) 27, 1985. Under this convention the groups are numbered 1 to 18.

### Metallocenes Useful in the Process of the Invention

The metallocenes utilized in the process of the present invention may be any of the biscyclopentadienyl derivatives of zirconium or hafnium, provided that both of the cyclopentadienyl groups of the biscyclopentadienyl derivative are each substituted with at least one isobutyl group. Biscyclopentadienyl metallocenes are well known in the art and are characterized by the presence of two cyclopentadienide moieties bonded in an eta-5 fashion to the transition metal. Also suitable are the corresponding bridged cyclopentadienyl compounds. Therefore, in this patent specification the terms "biscyclopentadienyl metallocene," "biscyclopentadienyl zirconium metallocene," "biscyclopentadienyl hafnium metallocene," and the like shall be understood to refer to and to encompass both unbridged and bridged versions of the respective compounds.

In one embodiment, the cyclopentadienyl rings of the bis(cyclopentadienyl) zirconium or hafnium metallocenes will each be substituted with two isobutyl groups. In another embodiment, the cyclopentadienyl rings of the bis(cyclopentadienyl) zirconium or hafnium metallocenes will each be substituted with one isobutyl group. In yet another embodiment each cyclopentadienyl group will be substituted with two alkyl groups, one of which is an isobutyl group and the other of which is a methyl group.

Examples of catalyst systems particularly useful in the process of this invention comprise one or more metallocenes represented by the general formula:

(1) R"(C₅R'ₖ)₂MQ'₂

wherein (C₅R'ₖ) is a substituted cyclopentadienyl, M is zirconium or hafnium, each group R' may be the same or different and is H or an optionally substituted hydrocarbyl radical such as alkyl, alicyclic, aryl, alkylaryl, or arylalkyl radicals containing from 1 to 20 carbon atoms, a silicon-containing hydrocarbyl radical, or a hydrocarbyl radical wherein two carbon atoms are joined together to form a C₄-C₆ ring, but at least one of said R' is an isobutyl group; R" is an optional bridging group is a C₁-C₄ alkylene radical, a dialkyl germanium or silicon, or an alkyl phosphine or amine radical bridging the pair of (C₅R'ₖ) rings; each Q' can be the same or different and is a hydrocarbyl radical, such as aryl, alkyl, alicyclic, alkenyl, alkylaryl, or arylalkyl having 1-20 carbon atoms, or a hydrocarboxyl radical having 1-20 carbon atoms, or a halogen, or Q' may also be a dihydrocarbyl amido radical.

Exemplary hydrocarbyl radicals are methyl, ethyl, propyl, butyl, amyl, isoamyl, hexyl, cyclohexyl, isobutyl, heptyl, octyl, nonyl, decyl, cetyl, ethylhexyl, phenyl, and the like. Exemplary alkylene radicals are methylene, ethylene, propylene, and the like. Exemplary halogen atoms include chlorine, bromine and iodine and of these halogen atoms, chlorine is preferred.

Methods of substituting hydrocarbon substituents onto a cyclopentadienyl ring of a metallocene are well known, and any suitable method may be utilized.

Generally, such methods involve a salt of the cyclopentadienyl compound, such as a lithium or sodium salt, that is reacted with a halogen substituted substituent. The halogen is removed from the carbon atom of the substituent by lithium or sodium and this carbon atom then covalently bonds to the cyclopentadienyl ring.

Non-limiting examples of the biscyclopentadienyl metallocenes of the invention include bis(isobutylcyclopentadienyl) zirconium dichloride, bis(isobutylcyclopentadienyl) zirconium dibromide, bis(isobutylcyclopentadienyl) zirconium diiodide, bis(isobutylcyclopentadienyl) zirconium dimethyl, bis(isobutylcyclopentadienyl) zirconium diethyl, bis(isobutylcyclopentadienyl) zirconium dipropyl, bis(isobutylcyclopentadienyl) zirconium dibutyl, bis(methyl-isobutyl-cyclopentadienyl) zirconium dichloride, bis(methyl-isobutyl-cyclopentadienyl) zirconium dibromide, bis(methyl-isobutyl-cyclopentadienyl) zirconium diiodide, bis(methyl-isobutyl-cyclopentadienyl) zirconium dimethyl, bis(methyl-isobutyl-cyclopentadienyl) zirconium diethyl, bis(methyl-isobutyl-cyclopentadienyl) zirconium dipropyl, bis(methyl-isobutyl-cyclopentadienyl) zirconium dibutyl, bis(isobutylcyclopentadienyl) hafnium dichloride, bis(isobutylcyclopentadienyl) hafnium dibromide, bis(isobutylcyclopentadienyl) hafnium diiodide, bis(isobutylcyclopentadienyl) hafnium dimethyl, bis(isobutylcyclopentadienyl) hafnium diethyl, bis(isobutylcyclopentadienyl) hafnium dipropyl, bis(isobutylcyclopentadienyl) hafnium dibutyl, bis(methyl-isobutyl-cyclopentadienyl) hafnium dichloride, bis(methyl-isobutyl-cyclopentadienyl) hafnium dibromide, bis(methyl-isobutyl-cyclopentadienyl) hafnium diiodide, bis(methyl-isobutyl-cyclopentadienyl) hafnium dimethyl, bis(methyl-isobutyl-cyclopentadienyl) hafnium diethyl, bis(methyl-isobutyl-cyclopentadienyl) hafnium dipropyl, bis(methyl-isobutyl-cyclopentadienyl) hafnium dibutyl, and the like. Also exemplary of the metallocenes useful in the process of the present invention are any bridged versions of the forgoing metallocenes, that is, versions of the forgoing compounds wherein the cyclopentadienyl groups are joined together by any bridging groups such as, for example, C₁-C₄ alkylene radicals, dialkyl germanium or silicon radicals, or alkyl phosphine or amine radicals.

### Catalyst Systems

The catalyst systems of the invention are formed by activating the biscyclopentadienyl metallocenes of the invention. The biscyclopentadienyl metallocenes of the invention may be activated by use of the traditional means of activation, specifically including the use of alkyl alumoxane compounds as activators, and ionizing activators, such as those represented by aryl-substituted boron compounds such as nitrogen-containing salts, carbenium, silylium or phosphonium salts, metal salts and neutral Lewis acid compounds. Each method is well-documented in the field of metallocene art. Related means of activation, such as the use of alkyl aluminum or other metal alkyl alkylating agents to convert metallocene halide compounds to hydride or alkyl group-containing compounds prior to activation with the ionizing activator compounds, will be suitable in accordance with the instant invention. For example, it will be understood by those skilled in the art that if ionizing activator compounds are to be used with metallocene halides which do not contain ligands reactive toward ionizing activators, such metallocenes may be treated with alkylating agents to incorporate such reactive ligands, and that this step is one of the steps necessary to form a catalytic complex by ionic activation in these circumstances.

Known alkylalumoxanes are additionally suitable as catalyst activators, particularly for the invention metal compounds comprising the halide ligands. The alumoxane component useful as catalyst activator typically is an oligomeric aluminum compound represented by the general formula (R-Al-O)[n], which is a cyclic compound, or R(R-Al-O)[n]AlR2, which is a linear compound. In the general alumoxane formula R is a C1 to C5 alkyl radical, for example, methyl, ethyl, propyl, butyl or pentyl and "n" is an integer from 1 to about 50. Most preferably, R is methyl and "n" is at least 4. Alumoxanes can be prepared by various procedures known in the art. For example, an aluminum alkyl may be treated with water dissolved in an inert organic solvent, or it may be contacted with a hydrated salt, such as hydrated copper sulfate suspended in an inert organic solvent, to yield an alumoxane. Generally, however prepared, the reaction of an aluminum alkyl with a limited amount of water yields a mixture of the linear and cyclic species of the alumoxane.

When using ionic catalysts comprising unbridged zirconium or hafnium metal cations and non-coordinating anions, the total catalyst system will generally additionally comprise one or more scavenging compounds. The term "scavenging compounds" as used in this application and its claims is meant to include those compounds effective for removing polar impurities from the reaction solvent. Such impurities can be inadvertently introduced with any of the polymerization reaction components, particularly with solvent, monomer and catalyst feed, and adversely affect catalyst activity and stability. It can result in decreasing or even elimination of catalytic activity, particularly when a metallocene cation-noncoordinating anion pair is the catalyst system. The polar impurities, or catalyst poisons include water, oxygen, metal impurities, etc. Preferably steps are taken before provision of such into the reaction vessel, for example by chemical treatment or careful separation techniques after or during the synthesis or preparation of the various components, but some minor amounts of scavenging compound will still normally be required in the polymerization process itself. Typically the scavenging compound will be an organometallic compound such as the Group-13 organometallic compounds of U.S. Pat. Nos. 5,153,157, 5,241,025, EP-A- 638 and WO-A-91/09882 and WO-A-94/03506, noted above, and that of WO-A-93/14132. Exemplary compounds include triethyl aluminum, triethyl borane, tri-isobutyl aluminum, isobutyl aluminumoxane, and n-octyl aluminum, those having bulky substituents covalently bound to the metal or metalloid center being preferred to minimize adverse interaction with the active catalyst. When an alkyl aluminum or alumoxane is used as activator, any excess over the amount of metallocene present will act as scavenger compounds and additional scavenging compounds may not be necessary. The amount of scavenging agent to be used with metallocene cation-noncoordinating anion pairs is minimized during polymerization reactions to that amount effective to enhance activity. In the process described in this invention, it was found that there is an optimum contact time between the scavenger compound and the reaction mixture to maximize catalyst activity. If the contact time is too long, detrimental catalyst deactivation might occur.

The catalyst systems of the invention may further comprise a support. Any effective method of supporting coordination catalyst systems may be used to incorporate the support, effective meaning that the catalyst system so prepared can be used for preparing polymer in a gas phase, solution, or slurry polymerization process. Methods for supporting catalyst systems are well known in the art.

For purposes of this patent specification the terms "carrier" or "support" are interchangeable and can be any support material, preferably a porous support material, such as for example, talc, inorganic oxides, inorganic chlorides, for example magnesium chloride and resinous support materials such as polystyrene, polyolefin or polymeric compounds, or any other organic support material, and the like, that has an average particle size greater than 10 µm.

The preferred support materials are inorganic oxide materials, which include those from the Periodic Table of Elements of Groups 2, 3, 4, 5, 13 or 14 metal oxides. In a preferred embodiment, the catalyst support materials include silica, alumina, silica-alumina, and mixtures thereof. Other inorganic oxides that may be employed either alone or in combination with the silica, alumina or silica-alumina are magnesia, titania, zirconia, and the like.

### Polymerization Process

The polymerization process of the invention involves contacting the polymerizable monomers (ethylene and optional comonomers) with the described catalyst systems in a liquid reaction medium. Processes employing liquid reaction media are well known in the art and include solution or slurry polymerizations. In the inventive process, reaction temperatures from about 25 °C to about 250° C, more preferably from about 25°C to about 150 °C, still more preferably from about 25 °C to about 135 °C, and most preferably from 40 °C to about 120 °C. In a preferred embodiment ethylene alone is polymerized, that is no comonomer is added, to form an ethylene homopolymer.

The inventive process may be carried out in batch mode, semi-batch mode, or continuously. However, regardless of the overall process mode, in the inventive process the metallocene, either in neat form or as a catalyst solution, is fed to the reaction medium continuously or semi-continuously, as distinguished from batch catalyst feeding. In ethylene polymerization processes it is typically desirable to control the production rate. Using continuous or semi-continuous catalyst feeding to control the production rate is a well-known method for accomplishing this objective. Thus, as is well understood in the art, and as used herein, continuous and semi-continuous catalyst feeding are distinguished from batch catalyst feeding as follows. When a catalyst is fed to a polymerization reaction in batch mode, all of the catalyst is fed to the reaction medium at the beginning of the polymerization, typically within about 1/60 of the total polymerization time. The more important distinction however, is that in batch catalyst feeding the catalyst is not fed in response to a desired reaction rate. That is, all of the catalyst is introduced at substantially one time and the reaction rate increases and decreases according to the kinetics of the injected catalyst. On the other hand, in continuous or semi-continuous catalyst feeding, the catalyst is typically added over a period longer than 1/60 of the total polymerization time. Again, however, the key distinction is that in continuous or semi-continuous catalyst feeding the catalyst is fed in response to the observed production rate in order to control production rate to the level desired at any given moment. Usually, it is desired to control production rate to a substantially constant value. Of course, the production rate could be varied at will between higher and lower values during the polymerization process. Thus, in continuous or semi-continuous catalyst feeding the production rate is observed, for example by monitoring the make-up flow of ethylene to reactor required to maintain the reactor pressure, and in response to the observed rate, the catalyst flow rate is increased, decreased, or maintained at the same level to the reactor as required in order to achieve the desired polymerization rate. This kind of reactor feedback control may be carried out manually or automatically using methods well known in the art. Thus, an aspect of the present invention is controlling the rate of polymerization of the ethylene and optional comonomers, or said ethylene alone, by feeding into a reaction medium, in response to the observed production rate, a catalyst solution comprising an unsupported zirconium or hafnium biscyclopentadienyl metallocene having one or more isobutyl groups on each cyclopentadienyl ring thereof.

The optional comonomer, which may be an alpha-olefin, is provided to the polymerization process and thus incorporated into the growing polymer chain to disrupt ethylene crystallinity and thereby modify the properties of the polymer. As is well known, when comonomer is provided to the process, a comonomer to ethylene ratio is established, and as more comonomer is provided relative to the ethylene, this ratio becomes higher and more comonomer is incorporated into the polymer with the result that the polymer crystallinity and density is lowered. Polymer density is a direct measure of polymer crystallinity and can be determined using standardized methods well known to the art. Thus, by controlling the relative amounts of comonomer and ethylene provided to the polymerization process, the density of the polymers produced may be adjusted to the desired levels.

In the inventive process, the provided comonomer serves to lower the density of the polymer below that observed for the corresponding ethylene homopolymer, which is prepared in the absence of comonomer. Higher ratios of comonomer to ethylene will produce lower density polymers and the ratio of comonomer to ethylene needed to achieve a given density can readily be determined by those skilled in the art. For example, in continuous ethylene polymerization operations, the density of the polymer being produced is typically regularly measured by securing samples of the polymer as it is discharged from the process, drying the samples if necessary, and measuring the density of the samples according to well known methods, such as, for example, those set forth in ASTM D 1505. By noting the trends in the density of the polymer samples over time, more or less comonomer can be provided to the process, thereby adjusting the ratio of comonomer to ethylene in the process to produce a polymer having the desired density. Similar procedures are used in batch polymerization processes, where varying ratios of comonomer to ethylene would typically be established in the process near the outset of the polymerization run, and, if necessary, adjusted either upward or downward in the next run according to the density results obtained. The ratio of comonomer to ethylene can be measured using techniques and equipment well known in the art, for example on-line gas chromatography.

Suitable comonomers for the process of the instant invention are the olefinically unsaturated compounds which include, for example, the C₁ - C₂₀ α-olefins such as 1-butene, 1-pentene, 1-hexene, 1-octene, 1-decene, 1-dodecene; and branched 1-olefins such as 3 methyl-1-butene, 3-methyl-1-pentene and 4-methyl-styrene-1-pentene, and vinyl-terminated polymers and oligomers such as those having up to 250 carbon atoms and higher. Cyclic olefins will also be suitable, especially C₅ to C₂₀ cyclic olefins including cyclopentene, norbomene, methylnorbornene, ethylnorbornene, and cyclododecene. Vinyl aromatics, e.g., styrene and alkyl-substituted styrenes are also suitable.

The process in accordance with the invention is particularly useful for the production of high density and medium density ethylene polymers. Medium density ethylene polymers, known as medium density polyethylene (MDPE), are defined herein as those polymers having densities equal to or greater than 0.925, but less than 0.940 g/cc. High density ethylene polymers, which are traditionally known as high-density polyethylene (HDPE), are defined herein to include those grades where the density is equal to or above 0.940 g/cc. Preferably the MDPE polymers made by the inventive process will have a density equal to or greater than 0.925 g/cc, but less than 0.940, more preferably equal to or greater than about 0.930, but less than 0.940 g/cc, and still more preferably greater than or equal to about 0.935, but less than 0.940 g/cc. Preferably the HDPE polymers made by the inventive process will have a density equal to or greater than 0.940 g/cc, more preferably equal to or greater than about 0.945 g/cc, and most preferably greater than or equal to about 0.950 g/cc. Most preferably the polymers will be ethylene homopolymers. As used herein in connection with polymer density, "about" means within plus or minus 0.002 g/cc.

Thus, in one embodiment, the process of the invention further comprises adjusting the ratio of comonomer to ethylene in the process to produce a polymer having a density greater than about 0.925 g/cc, preferably greater than about 0.930, more preferably greater than about 0.935, even more preferably greater than about 0.940 g/cc, yet more preferably greater than about 0.945 g/cc, and most preferably greater than or equal to about 0.950 g/cc. Another embodiment of the present invention is the process as defined above wherein no comonomer is contacted with the ethylene and the metallocene, that is ethylene alone is fed to the reaction medium in order to form an ethylene homopolymer.

The process is suitably conducted in the following manner. A solvent, typically a hydrocarbon solvent, is introduced to the reaction vessel and then heated to reaction temperature. Ethylene is introduced to the reactor to form a liquid reaction medium comprising the solvent within which the catalyst system and monomers are contacted for the polymerization reaction. The scavenging compound, which may be an alumoxane, is introduced into the solvent to reduce or eliminate catalyst poisons present in any of the reaction medium components prior to introduction of metallocene catalyst into the reactor. If the scavenging compound and activator are different, and contacted with each other for sufficient time, adverse effects on the effectiveness of that activator might occur. In this process, the activator and metallocene compound are contacted in the polymerization reaction vessel in the presence of the polymerizable monomers, comprising the in-situ activation.

Typically the reaction is conducted at pressures from atmospheric to 500 psig (1-35 bar), preferably from 100 to 300 psig (8 to 21 bar). Typically the polymerization reaction will be exothermic and the reactor will be chilled or cooled in accordance with known methods to assure that temperatures do not exceed those reasonably suitable for the polymer being produced.

The feedstock purification prior to introduction into the reaction solvent follows standard practices in the art, e.g. molecular sieves, alumina beds and oxygen removal catalysts are used for the purification of ethylene, alpha -olefin, and optional diene. The solvent itself as well, e.g., hexane and toluene, are similarly treated.

The alpha -olefin monomer(s) and diene monomer(s), if included, are introduced in an amount proportional to the levels of incorporation desired for the polymer to be produced and the effective reactive ratios for the polymerizable monomers in the presence of the specific catalyst chosen. In the preferred embodiment the combination of the alpha -olefin monomer(s) in reaction solvent as introduced into the reactor and effective vapor pressure of the alpha -olefin monomer(s) is maintained according to the rate of incorporation into the copolymer product. In an alternative embodiment, the partial pressure in the reactor will be provided by ethylene alone in which situation the alpha -olefin monomer(s) are added solely with reaction solvent. The amounts and vapor pressure will vary according to catalyst selection and polymer to be produced, but can be empirically determined well within the skill in the art, particularly in view of the description provided in the following examples.

The catalyst activator, e.g., non-coordinating anion precursor, ionizing anionic precursor, or alumoxane, can be introduced along with or separately from introduction of the optional diolefin monomer(s), if used. The diolefin can be provided in an amount effective for its rate of reaction and rate of conversion. The catalyst activator can be provided in an amount that is equal to 0.2 to 10 molar equivalents of the zirconium or hafnium metallocene compound, preferably 0.25 to 5, and even more preferably 0.33 to 3.0, when a noncoordinating anion precursor. Typically the provision of the noncoordinating anion precursor activator will be in an effective solvent, typically an aromatic solvent such as toluene. When the activator is alumoxane, it can be used in an amount that is equal to 0.5 to 10,000 molar equivalents of the metallocene compound, preferably 0.75 to 5000, and even more preferably 1.0 to 500. Preferably the alumoxane will be used in an amount empirically determined to suffice for concurrent removal of impurities and activation, but only in such amounts as necessary to accomplish those functions. Monitoring of polymerization activity by known methods will permit on-line adjustment of alumoxane to assure neither excess nor deficit amounts are maintained for unwanted periods.

The scavenging compounds are provided separately afterwards or with one of the foregoing feedstreams, in an amount suitable to increase the activity of the catalyst but in an amount lower than that at which depression of reactivity is observed. Typically an effective amount of the scavenging compound is about 0 (e.g., with an alumoxane activator) to 100 mol. ratio based upon the ratio of scavenging compound to activator, preferably the ratio is 0.3 to 30, and most preferably it is 0.5 to 10.

In the case where ionic activators are used, it is preferable that within not more than about 1 minute, more preferably within 30 seconds, the metallocene compound is contacted with the activator in the presence of the polymerizable monomers so as to limit the residence time of the scavenging compound with the ionic activator. The metallocene is typically provided in an aliphatic or aromatic solvent, which can be any of those suitable as polymerization medium. In the case of an insoluble metallocene or a supported catalyst, the metallocene will be fed as a slurry. For ease of reference the examples below refer to the metallocene in solvent as "catalyst solution". Though any order of activation will have at least some suitability, the order of addition described herein is particularly suitable for use with ionizing activators that provide the stabilized metallocene cation-noncoordinating anion pair. Since alumoxane can act as a suitable scavenger compound, its addition as activator in accordance with the described process eliminates the need to introduce a scavenger and the preference for limited time of contact between scavenger and activator is largely eliminated so long as the addition of the metallocene to activator containing solution is in the presence of polymerizable monomers. In this manner premature activation can be avoided.

Ethylene gas is then provided into the reaction vessel in an amount proportional to the level of incorporation desired and the effective reactive ratios for the polymerizable monomers in the presence of the specific catalyst chosen, as with the alpha -olefin monomer(s). The polymerization starts upon contact of the monomers with the activated catalyst and the rates of supply of each of the components of the system are adjusted for stable operations at the level of production, molecular weight, monomer incorporation and equipment limitations. The reaction temperature may be permitted to exceed the initial temperature but will preferably be at all times greater than the lower limit of the ranges described above for the invention process.

Thus, in one embodiment, the instant invention is a process for producing ethylene polymers comprising:
a) introducing ethylene and optional comonomers into a liquid reaction medium, or alternatively, introducing ethylene alone into said liquid reaction medium;
b) maintaining said liquid reaction medium at a temperature between 25 °C and 250 °C;
c) introducing a catalyst activator into said reaction medium; and
d) feeding continuously or semi-continuously into said reaction medium a catalyst solution comprising an unsupported zirconium or hafnium biscyclopentadienyl metallocene having one or more isobutyl groups on each cyclopentadienyl ring thereof.

In another embodiment, the instant invention is a process for producing ethylene polymers comprising:
a) introducing ethylene and optional comonomers into a liquid reaction medium, or alternatively, introducing ethylene alone into said liquid reaction medium;
b) maintaining said liquid reaction medium at a temperature between 25 °C and 250 °C;
c) introducing a catalyst activator into said reaction medium; and
d) controlling the rate of polymerization of said ethylene and optional comonomers, or said ethylene alone, by feeding into said reaction medium, in response to the observed production rate, a catalyst solution comprising an unsupported zirconium or hafnium biscyclopentadienyl metallocene having one or more isobutyl groups on each cyclopentadienyl ring thereof.

In an alternative embodiment, the instant invention is a process for producing ethylene polymers comprising:
a) introducing ethylene and optional comonomers into a liquid reaction medium, or alternatively, introducing ethylene alone into said liquid reaction medium;
b) maintaining said liquid reaction medium at a temperature between 25 °C and 250 °C; and
c) feeding continuously or semi-continuously into said reaction medium a catalyst solution comprising a reaction product formed by bringing into contact an activator and an unsupported zirconium or hafnium biscyclopentadienyl metallocene, said unsupported zirconium or hafnium biscyclopentadienyl metallocene having one or more isobutyl groups on each cyclopentadienyl ring thereof.

Thus, in a preferred embodiment, the instant invention is a process for producing ethylene homopolymers comprising:
a) introducing ethylene alone into a liquid reaction medium;
b) maintaining said liquid reaction medium at a temperature between 25 °C and 250 °C;
c) introducing a catalyst activator into said reaction medium; and
d) feeding continuously or semi-continuously into said reaction medium a catalyst solution comprising an unsupported zirconium or hafnium biscyclopentadienyl metallocene having one or more isobutyl groups on each cyclopentadienyl ring thereof.

It will be understood that in all of the embodiments of the present invention which comprise "adding ethylene alone" this phase is meant only to indicate that ethylene alone is added as a polymerizable monomer, that is, that comonomers are omitted, in order to produce ethylene homopolymers, and that the phrase does not exclude any of the other components of the process which may be utilized in carrying out the inventive process. When ethylene homopolymers are produced, the inventive process will typically exhibit catalyst activities of greater than 300,000 kg PE/mol-metal-hr. In one embodiment the inventive process will exhibit an activity of between 300, 000 and 2,000,000 kg PE/mol-metal-hr in ethylene homopolymerizations. In another embodiment, the inventive process will exhibit an activity of between 300, 000 and 1,000,000 kg PE/mol-metal-hr in ethylene homopolymerizations. In yet another embodiment, the inventive process will exhibit an activity of between 340,000 and 600,000 kg PE/mol-metal-hr in ethylene homopolymerizations.

In other embodiments of the forgoing process the zirconium or hafnium biscyclopentadienyl metallocene is bis(isobutylcyclopentadienyl) zirconium dichloride or bis(methyl isobutylcyclopentadienyl) zirconium dichloride. In a preferred embodiment, ethylene alone is introduced (i.e., without any comonomers) and the biscyclopentadienyl metallocene is bis(isobutylcyclopentadienyl) zirconium dichloride.

The solvents for the polymerization reaction will comprise those known for solution polymerization, typically the aliphatic solvents represented by hexane, or the aromatic solvents, represented by toluene. Additional examples include heptane, cyclohexane, and Isopar E (C8 to C12 aliphatic solvent, Exxon Chemical Co., U.S.). Preferably the solvent is aliphatic, most preferably it is hexane.

Though the Examples and the discussion are directed to a single reactor configuration and narrow polydispersity polymers, it is well-known that the use in series of two such reactors each operated so as to achieve different polymer molecular weight characteristics, or by blending polymers from different reactor conditions or utilizing two or more different transition metal catalysts in one or more reactors, can yield improved processing polymers. The disclosures of U.S. Pat. No. 4,722,971 and WO 93/21270 are instructive and are incorporated for purposes of U.S. patent practice. Though directed to the use of vanadium catalysts, the substitution of the catalyst systems of this invention into one such reactor, or two different invention catalysts into two such reactors, or similar use in two separate polymerizations with subsequent physical blending of the polymer products, will permit tailoring of characteristics (e.g., molecular weights and diene contents) suitable for balancing vulcanization properties with processability. Similarly, the use of mixed catalyst systems, the invention catalysts with themselves or with others, in one or more such reactors will permit preparation of bimodal or multimodal EPC polymers having improved processing properties.

### EXAMPLES

In order to provide a better understanding of the present invention including representative advantages and limitations thereof, the following examples are offered. Examples 1-2 illustrate the process of the instant invention. Examples 3-14 illustrate processes which do not utilize a zirconium or hafnium biscyclopentadienyl metallocene having one or more isobutyl groups on each cyclopentadienyl ring thereof. As can be seen from the examples, ethylene homopolymerization carried out according to the inventive process results in more than twice the productivity of the homopolymerization processes shown in the examples which do not utilize a zirconium or hafnium biscyclopentadienyl metallocene having one or more isobutyl groups on each cyclopentadienyl ring thereof.

### Example 1: High Activity Ethylene Polymerization

At room temperature, an autoclave reactor was charged with 250 cc of hexane and 2.5 cc of a 10 %wt toluene solution of the MAO further diluted to 10 cc in toluene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 1.25*10⁻⁴ M in toluene and the pumping rate was between 0.05 and 0.1 cc/min depending on the ethylene make-up flow rate. This flow rate was kept at an average of 0.5 SLPM. The polymerization was run for 30 min. At the end, the polymer was washed with isopropanol and dried in a vacuum oven for 24 h at 80°C. Table 1 shows the polymer yield, the total catalyst usage, the catalyst efficiency, the catalyst efficiency per mol of catalyst, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 1:**

| **Results for Example 1** | | | | | | |
|---|---|---|---|---|---|---|
| Catalyst: | | bis(isobutylcyclopentadienyl) ziconium dichloride (FW=400 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | Catalyst Effic. (Kg/mol) | Mn | PD | TON |
|---|---|---|---|---|---|---|
| 8.94 | 0.02 | 447.0 | 178800 | 113741 | 2.77 | 1572 |
| 7.19 | 0.01 | 719.0 | 287600 | 127770 | 2.94 | 2251 |

### Example 2: Ethylene-Hexene Polymerization

At room temperature, the autoclave reactor was charged with 250 cc of hexane, 2.5 cc of a 10 %wt toluene solution of the MAO futher diluted to 10 cc in toluene and 15 cc of 1-hexene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 1.25*10⁻⁴ M in toluene and the pumping rate was between 0.05 and 0.1 cc/min depending on the ethylene make-up flow rate. This flow rate was kept at an average of 0.5 SLPM. The polymerization was run for 30 min. At the end, the polymer was washewd with isopropanol and dried in a vacuum oven for 24 h at 80°C. Table 2 shows the polymer yield, the total catalyst usage, the catalyst efficiency, the wt % of hexene in the polymer, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 2:**

| **Results for Example 2** | | | | | | |
|---|---|---|---|---|---|---|
| Catalyst: | | bis(isobutylcyclopentadienyl) ziconium dichloride (FW=400 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | wt % Hexene | Mn | PD | TON |
|---|---|---|---|---|---|---|
| 7.33 | 0.07 | 104.7 | 3.17 | 63694 | 3.29 | 657 |
| 14.61 | 1.4 | 10.44 | 3.01 | 63682 | 2.35 | 66 |

### Example 3: Ethylene Polymerization

As in Example 1, the autoclave reactor was charged with 250 cc of hexane and 2.5 cc of a 10 %wt toluene solution of the MAO futher diluted to 10 cc in toluene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 5.3*10⁻⁴ M in toluene and the pumping rate was between 0.05 and 0.5 cc/min depending on the ethylene make-up flow rate. This flow rate was kept at an average of 0.25 SLPM. The polymerization was run for 30 min. At the end, the polymer was washed with isopropanol and dried in a vacuum oven for 24 h at 80°C. Table 3 shows the polymer yield, the total catalyst usage, the catalyst efficiency, the catalyst efficiency per mol of catalyst, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 3:**

| **Results for Example 3** | | | | | | |
|---|---|---|---|---|---|---|
| Catalyst: | | bis(isopropylcyclopentadienyl) ziconium dichloride (FW=376) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | Catalyst Effic. (Kg/mol) | Mn | PD | TON |
|---|---|---|---|---|---|---|
| 10.72 | 0.52 | 20.62 | 7753 | 333097 | 2.23 | 23 |
| 10.94 | 0.27 | 40.52 | 15236 | 296420 | 2.37 | 51 |

### Example 4: Ethylene-Hexene Polymerization

As in Example 2, the autoclave reactor was charged with 250 cc of hexane, 2.5 cc of a 10 %wt toluene solution of the MAO futher diluted to 10 cc in toluene and 15 cc of 1-hexene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 5.3*10⁻⁴ M in toluene and the pumping rate was 0.15 cc/min depending on the ethylene make-up flow rate. This flow rate was kept at an average of 0.25 SLPM. The polymerization was run for 30 min. At the end, the polymer was washed with isopropanol and dried in a vacuum oven for 24 h at 80°C. Table 4 shows the polymer yield, the total catalyst usage, the catalyst efficiency, the wt % of hexene in the polymer, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 4:**

| **Results for Example 4** | | | | | | |
|---|---|---|---|---|---|---|
| Catalyst: | | bis(isopropylcyclopentadienyl) ziconium dichloride (FW=376 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | wt % Hexene | Mn | PD | TON |
|---|---|---|---|---|---|---|
| 10 | 0.16 | 62.5 | 1.6 | 58856 | 2.92 | 400 |
| 13.46 | 0.16 | 84.13 | 1.7 | 72108 | 3.12 | 439 |

### Example 5: Ethylene Polymerization

As in Example 1, the autoclave reactor was charged with 250 cc of hexane and 2.5 cc of a 10 %wt toluene solution of the MAO futher diluted to 10 cc in toluene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 2.5*10⁻⁴ M in toluene and the pumping rate was between 0.05 and 0.15 cc/min depending on the ethylene make-up flow rate. This flow rate was kept at an average of 1.1 SLPM. The polymerization was run for 30 min. At the end, the polymer was washed with isopropanol and dried in a vacuum oven for 24 h at 80°C. Table 5 shows the polymer yield, the total catalyst usage, the catalyst efficiency, the catalyst efficiency per mol of catalyst, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 5:**

| **Results for Example 5** | | | | | | |
|---|---|---|---|---|---|---|
| Catalyst: | | bis(n-butylcyclopentadienyl) ziconium dichloride (FW=400 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | Catalyst Effic. (Kg/mol) | Mn | PD | TON |
|---|---|---|---|---|---|---|
| 19.26 | .29 | 66.41 | 26564 | 141644 | 2.32 | 188 |
| 14.56 | 0.04 | 364.0 | 145600 | 144472 | 2.39 | 1007 |

### Example 6: Ethylene-Hexene Polymerization

As in Example 2, the autoclave reactor was charged with 250 cc of hexane, 2.5 cc of a 10 %wt toluene solution of the MAO futher diluted to 10 cc in toluene and 15 cc of 1-hexene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 2.5*10⁻⁴ M in toluene and the pumping rate was 0.05 cc/min depending on the ethylene make-up flow rate. This flow rate was kept at an average of 0.4 SLPM. The polymerization was run for 30 min. At the end, the polymer was washed with isopropanol and dried in a vacuum oven for 24 h at 80°C. Table 6 shows the polymer yield, the total catalyst usage, the catalyst efficiency, the wt % of hexene in the polymer, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 6:**

| **Results for Example 6** | | | | | | |
|---|---|---|---|---|---|---|
| Catalyst: | | bis(n-butylcyclopentadienyl) ziconium dichloride (FW=400 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | wt % Hexene | Mn | PD | TON |
|---|---|---|---|---|---|---|
| 7.01 | 0.09 | 77.89 | 2.88 | 57232 | 3.39 | 544 |
| 7.37 | 0.08 | 92.13 | 2.61 | 95031 | 2.72 | 388 |

### Example 7: Ethylene Polymerization

As in Example 1, the autoclave reactor was charged with 250 cc of hexane and 2.5 cc of a 10 %wt toluene solution of the MAO further diluted to 10 cc in toluene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 1.25*10⁻⁴ M in toluene and the pumping rate was between 0.05 and 1.3 cc/min depending on the ethylene make-up flow rate. This flow rate was kept at an average of about 0.36 SLPM. The polymerization was run for 30 min. At the end, the polymer was washed with isopropanol and dried in a vacuum oven for 24 h at 80°C. Table 7 shows the polymer yield, the total catalyst usage, the catalyst efficiency, the catalyst efficiency per mol of catalyst, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 7:**

| **Results for Example 7** | | | | | | |
|---|---|---|---|---|---|---|
| Catalyst: | | bis(t-butylcyclopentadienyl) ziconium dichloride (FW=400 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | Catalyst Effic. (Kg/mol) | Mn | PD | TON |
|---|---|---|---|---|---|---|
| 6.31 | 0.32 | 19.72 | 7888 | 157676 | 3.25 | 50 |
| 7.15 | 0.08 | 89.38 | 35752 | 161989 | 2.8 | 221 |

### Example 8: Ethylene-Hexene Polymerization

As in Example 2, the autoclave reactor was charged with 250 cc of hexane, 2.5 cc of a 10 %wt toluene solution of the MAO further diluted to 10 cc in toluene and 15 cc of 1-hexene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 1.25*10⁻⁴ M in toluene and the pumping rate was 0.06 to 0.4 cc/min depending on the ethylene make-up flow rate. This flow rate was kept at an average of 0.35 SLPM. The polymerization was run for 30 min. At the end, the polymer was washed with isopropanol and dried in a vacuum oven for 24 h at 80°C. Table 8 shows the polymer yield, the total catalyst usage, the catalyst efficiency, the wt % of hexene in the polymer, the number average molecular weight, the polydispersity and the Turn-Over Number (TON), defined as the ratio of the number of mols of polymer per mol of catalyst used. (TON = (Polymer Yield*Catalyst FW) / (Mn*Catalyst Usage). The table shows results from two replica runs.

**Table 8:**

| **Results for Example 8** | | | | | | |
|---|---|---|---|---|---|---|
| Catalyst: | | bis(t-butylcyclopentadienyl) ziconium dichloride (FW=400 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | wt % Hexene | Mn | PD | TON |
|---|---|---|---|---|---|---|
| 4.47 | 0.26 | 17.19 | 3.28 | 16621 | 2.9 | 414 |
| 11.52 | 0.65 | 17.72 | 2.91 | 12722 | 2.63 | 557 |

### Example 9: Ethylene Polymerization

As in Example 1, the autoclave reactor was charged with 250 cc of hexane and 2.5 cc of a 10 %wt toluene solution of the MAO futher diluted to 10 cc in toluene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 2.17*10⁻⁴ M in toluene and the pumping rate was about 0.01 cc/min depending on the ethylene make-up flow rate. This flow rate was kept at an average of about 0.25 SLPM. The polymerization was run for 30 min. At the end, the polymer was washed with isopropanol and dried in a vacuum oven for 24 h at 80°C. Table 9 shows the polymer yield, the total catalyst usage, the catalyst efficiency, the catalyst efficiency per mol of catalyst, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 9:**

| **Results for Example 9** | | | | | | |
|---|---|---|---|---|---|---|
| Catalyst: | | bis(diisopropylcyclopentadienyl) ziconium dichloride (FW=460 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | Catalyst Effic. (Kg/mol) | Mn | PD | TON |
|---|---|---|---|---|---|---|
| 5.83 | 0.062 | 94.8 | 43608 | 207808 | 2.51 | 210 |
| 5.2 | 0.062 | 87.1 | 40066 | 244462 | 2.51 | 164 |

### Example 10: Ethylene-Hexene Polymerization

As in Example 2, the autoclave reactor was charged with 250 cc of hexane, 2.5 cc of a 10 %wt toluene solution of the MAO futher diluted to 10 cc in toluene and 15 cc of 1-hexene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 2.17*10⁻⁴ M in toluene and the pumping rate was 0.1 to 0.3 cc/min depending on the ethylene make-up flow rate. This flow rate was kept at an average of 0.3 SLPM. The polymerization was run for 30 min. At the end, the polymer was washewd with isopropanol and dried in a vacuum oven for 24 h at 80°C. Table 10 shows the polymer yield, the total catalyst usage, the catalyst efficiency, the wt % of hexene in the polymer, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 10:**

| **Results for Examp. 10** | | | | | | |
|---|---|---|---|---|---|---|
| Catalyst: | | bis(diisopropylcyclopentadienyl) ziconium dichloride (FW= 460 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | wt % Hexene | Mn | PD | TON |
|---|---|---|---|---|---|---|
| 7.3 | 0.24 | 30.42 | 1.4 | 23264 | 4.5 | 601 |
| 6.17 | 0.24 | 25.71 | 1.5 | 34324 | 2.89 | 345 |

### Example 11: Ethylene Polymerization

As in Example 1, the autoclave reactor was charged with 250 cc of hexane and 2.5 cc of a 10 %wt toluene solution of the MAO futher diluted to 10 cc in toluene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 2.2*10⁻⁴ M in toluene and the pumping rate was about 0.01 to 0.3 cc/min depending on the ethylene make-up flow rate. This flow rate was kept at an average of about 0.46 SLPM. The polymerization was run for 30 min. At the end, the polymer was washed with isopropanol and dried in a vacuum oven for 24 h at 80°C. Table 11 shows the polymer yield, the total catalyst usage, the catalyst efficiency, the catalyst efficiency per mol of catalyst, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 11:**

| **Results for Examp. 11** | | | | | | |
|---|---|---|---|---|---|---|
| Catalyst: | | bis(cyclohexylcyclopentadienyl) ziconium dichloride (FW=456 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | Catalyst Effic. (Kg/mol) | Mn | PD | TON |
|---|---|---|---|---|---|---|
| 9.3 | 0.15 | 62.0 | 28272 | 130097 | 2.3 | 217 |
| 7.55 | 0.068 | 111 | 50616 | 245684 | 2.21 | 206 |

### Example 12: Ethylene-Hexene Polymerization

As in Example 2, the autoclave reactor was charged with 250 cc of hexane, 2.5 cc of a 10 %wt toluene solution of the MAO further diluted to 10 cc in toluene and 15 cc of 1-hexene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 2.17*10⁻⁴ M in toluene and the pumping rate was 0.05 to 0.1 cc/min depending on the ethylene make-up flow rate. This flow rate was kept at an average of 0.46 SLPM. The polymerization was run for 30 min. At the end, the polymer was washed with isopropanol and dried in a vacuum oven for 24 h at 80°C. Table 12 shows the polymer yield, the total catalyst usage, the catalyst efficiency, the wt % of hexene in the polymer, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 12:**

| **Results for Examp. 12** | | | | | | |
|---|---|---|---|---|---|---|
| Catalyst: | | bis(cyclohexylcyclopentadienyl) ziconium dichloride (FW= 456 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | wt % Hexene | Mn | PD | TON |
|---|---|---|---|---|---|---|
| 9.41 | .066 | 142.58 | 2.1 | 54879 | 3.19 | 1185 |
| 8.77 | .063 | 140.1 | 2 | 95959 | 2.4 | 666 |

### Example 13: Ethylene Polymerization

As in Example 1, the autoclave reactor was charged with 250 cc of hexane and 2.5 cc of a 10 %wt toluene solution of the MAO further diluted to 10 cc in toluene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 2.63*10⁻⁴ M in toluene and the pumping rate was about 0.01 to 0.15 cc/min depending on the ethylene make-up flow rate. This flow rate was kept at an average of about 0.42 SLPM. The polymerization was run for 30 min. At the end, the polymer was washed with isopropanol and dried in a vacuum oven for 24 h at 80°C. Table 13 shows the polymer yield, the total catalyst usage, the catalyst efficiency, the catalyst efficiency per mol of catalyst, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 13:**

| **Results for Examp. 13** | | | | | | |
|---|---|---|---|---|---|---|
| Catalyst: | | bis(trimethylsilylcyclopentadienyl) ziconium dichloride (FW = 380 g/gmol) | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | Catalyst Effic. (Kg/mol) | Mn | PD | TON |
|---|---|---|---|---|---|---|
| 7.32 | 0.17 | 43.06 | 16363 | 344562 | 2.21 | 47 |
| 7.51 | 0.083 | 90.48 | 34382 | 313938 | 2.64 | 110 |

### Example 14: Ethylene-Hexene Polymerization

As in Example 2, the autoclave reactor was charged with 250 cc of hexane, 2.5 cc of a 10 %wt toluene solution of the MAO further diluted to 10 cc in toluene and 15 cc of 1-hexene. The reactor pressure was vented before heating to the reaction temperature of 60°C. The reactor pressure was raised to 125 psig with ethylene. The polymerization was run under semibatch mode with pure ethylene feed to the reactor. The catalyst pumping was started immediately after the pressurization with ethylene. The catalyst solution concentration was 2.17*10⁻⁴ M in toluene and the pumping rate was 0.01 to 0.1 cc/min depending on the ethylene make-up flow rate. This flow rate was kept at an average of 0.38 SLPM. The polymerization was run for 30 min. At the end, the polymer was washed with isopropanol and dried in a vacuum oven for 24 h at 80°C. Table 14 shows the polymer yield, the total catalyst usage, the catalyst efficiency, the wt % of hexene in the polymer, the number average molecular weight, the polydispersity and the Turn-Over Number (TON), defined as the ratio of the number of mols of polymer per mol of catalyst used (TON = (Polymer Yield*Catalyst FW) / (Mn*Catalyst Usage). The table shows results from two replica runs.

**Table 14:**

| **Results for Examp. 14** | | | | | | |
|---|---|---|---|---|---|---|
| Catalyst: | | bis(trimethylsilylcyclopentadienyl) ziconium dichloride | | | | |
| Activator: | | Methylalumoxane | | | | |
| Temperature: | | 60°C | | | | |
| Pressure: | | 125 psig | | | | |

| Polymer Yield (g) | Catalyst Usage (mg) | Catalyst Effic. (Kg/g) | wt% Hexene | Mn | PD | TON |
|---|---|---|---|---|---|---|
| 7.37 | 0.087 | 84.71 | 2.5 | 72023 | 2.62 | 447 |
| 5.2 | 0.061 | 85.8 | 2.9 | 51315 | 3.72 | 635 |

## Claims

1. A process for producing ethylene polymers comprising:
a) introducing ethylene and optional comonomers into a liquid reaction medium, or alternatively, introducing ethylene alone into said liquid reaction medium;
b) maintaining said liquid reaction medium at a temperature between 25°C and 250°C;
c) introducing a catalyst activator into said reaction medium; and
d) feeding continuously or semi-continuously into said reaction medium a catalyst solution comprising an unsupported zirconium or hafnium biscyclopentadienyl metallocene having one or more isobutyl groups on each cyclopentadienyl ring thereof.

2. The process of claim 1 wherein said metallocene is the zirconium metallocene.

3. The process of claim 2 wherein said metallocene is bis(isobutylcyclopentadienyl) zirconium dichloride or bis(methyl isobutylcyclopentadienyl) zirconium dichloride.

4. The process of any of claims 1-3 wherein the temperature of said reaction medium is between 40 °C and 150 °C.

5. The process of an of claims 1-3 wherein the temperature of said reaction medium is between 50 °C and 135 °C.

6. The process of claim 4 or 5 wherein said activator comprises an ionizing activator comprising comprising haloaryl-substituted boron or aluminum compounds.

7. The process of claim 4 or 5 wherein said activator comprises an alkyl alumoxane activator.

8. The process of any of claims 1 - 7 wherein said ethylene is polymerized with at least one C₃-C₈ α-olefin.

9. The process of claim 8 wherein said ethylene is polymerized with at least one C₃-C₈ α-olefin to prepare an ethylene copolymer having a density greater than 0.925 and less than 0.940.

10. The process of claim 8 wherein said ethylene is polymerized, optionally with at least one C₃-C₈ α-olefin, to prepare an ethylene copolymer having a density greater than 0.940 and less than 0.950.

## Patentansprüche

1. Verfahren zur Herstellung von Ethylenpolymeren, bei dem
a) Ethylen und gegebenenfalls Comonomere in flüssiges Reaktionsmedium eingebracht werden, oder alternativ Ethylen allein in das flüssige Reaktionsmedium eingebracht wird;
b) das flüssige Reaktionsmedium auf einer Temperatur zwischen 25°C und 250°C gehalten wird;
c) Katalysatoraktivator in das Reaktionsmedium eingebracht wird; und
d) kontinuierlich oder halbkontinuierlich in das Reaktionsmedium Katalysatorlösung eingespeist wird, die trägerloses Zirconium- oder Hafniumbiscyclopentadienylmetallocen mit einer oder mehreren Isobutylgruppen an jedem Cyclopentadienylring desselben umfasst.

2. Verfahren nach Anspruch 1, bei dem das Metallocen das Zirconiummetallocen ist.

3. Verfahren nach Anspruch 2, bei dem das Metallocen Bis(isobutylcyclopentadienyl)zirconiumdichlorid oder Bis(methylisobutylcyclopentadienyl)zirconiumdichlorid ist.

4. Verfahren nach einem der Ansprüche 1 bis 3, bei dem die Temperatur des Reaktionsmediums zwischen 40°C und 150°C liegt.

5. Verfahren nach einem der Ansprüche 1 bis 3, bei dem die Temperatur des Reaktionsmediums zwischen 50°C und 135°C liegt.

6. Verfahren nach Anspruch 4 oder 5, bei dem der Aktivator ionisierenden Aktivator umfasst, der haloarylsubstituierte Bor- oder Aluminiumverbindungen umfasst.

7. Verfahren nach Anspruch 4 oder 5, bei dem der Aktivator Alkylalumoxanaktivator umfasst.

8. Verfahren nach einem der Ansprüche 1 bis 7, bei dem das Ethylen mit mindestens einem C₃- bis C₈-α-Olefin polymerisiert wird.

9. Verfahren nach Anspruch 8, bei dem das Ethylen mit mindestens einem C₃- bis C₈-α-Olefin polymerisiert wird, um Ethylencopolymer mit einer Dichte größer als 0,925 und kleiner als 0,940 herzustellen.

10. Verfahren nach Anspruch 8, bei dem Ethylen gegebenenfalls mit mindestens einem C₃- bis C₈-α-Olefin polymerisiert wird, um Ethylencopolymer mit einer Dichte größer als 0,940 und kleiner als 0,950 herzustellen.

## Revendications

1. Procédé pour la production de polymères d'éthylène, comprenant les étapes consistant :
a) à introduire de l'éthylène et des comonomères éventuels dans un milieu réactionnel liquide ou bien, en variante, à introduire de l'éthylène seul dans ledit milieu réactionnel liquide ;
b) à maintenir ledit milieu réactionnel liquide à une température comprise dans l'intervalle de 25°C à 250°C ;
c) à introduire un activateur de catalyseur dans ledit milieu réactionnel ; et
d) à amener de manière continue ou semicontinue dans ledit milieu réactionnel une solution de catalyseur comprenant un métallocène du type biscyclopentadiényl-zirconium ou-hafnium non fixé sur un support, comprenant un ou plusieurs groupes isobutyle sur chacun de ses noyaux cyclopentadiényle.

2. Procédé suivant la revendication 1, dans lequel ledit métallocène est le métallocène au zirconium.

3. Procédé suivant la revendication 2, dans lequel ledit métallocène consiste en dichlorure de bis(isobutylcyclopentadiényl)zirconium ou dichlorure de bis(méthylisobutylcyclopentadiényl)zirconium.

4. Procédé suivant l'une quelconque des revendications 1 à 3, dans lequel la température dudit milieu réactionnel est comprise dans l'intervalle de 40°C à 150°C.

5. Procédé suivant les revendications 1 à 3, dans lequel la température dudit milieu réactionnel est comprise dans l'intervalle de 50°C à 135°C.

6. Procédé suivant la revendication 4 ou 5, dans lequel ledit activateur comprend un activateur ionisant comprenant des composés de bore ou d'aluminium à substituant halogénoaryle.

7. Procédé suivant la revendication 4 ou 5, dans lequel ledit activateur comprend un activateur du type alkylalumoxane.

8. Procédé suivant l'une quelconque des revendications 1 à 7, dans lequel ledit éthylène est polymérisé avec au moins une a-oléfine en C₃ à C₈.

9. Procédé suivant la revendication 8, dans lequel ledit éthylène est polymérisé avec au moins une α-oléfine en C₃ à C₈ pour préparer un copolymère d'éthylène ayant une densité supérieure à 0,925 et inférieure à 0,940.

10. Procédé suivant la revendication 8, dans lequel ledit éthylène est polymérisé, facultativement avec au moins une α-oléfine en C₃ à C₈, pour préparer un copolymère d'éthylène ayant une densité supérieure à 0,940 et inférieure à 0,950.
